# EUROPEAN PATENT SPECIFICATION

(11) **EP 3 955 767 B1**
(45) Date of publication and mention of the grant of the patent: **28.06.2023**
(21) Application number: 20742516.6
(22) Date of filing: 12.06.2020
(51) Int. Cl.: A44B 17/00, A44B 1/32

(54) **DEVICE CLAMPING, MULTI-PURPOSE, WITH REMOVABLE, INTERCHANGEABLE AND CUSTOMIZABLE PLATE**
MEHRZWECKKLEMMVORRICHTUNG MIT ABNEHMBARER, AUSTAUSCHBARER UND ANPASSBARER PLATTE
DISPOSITIF DE SERRAGE, POLYVALENT, AVEC PLAQUE AMOVIBLE, INTERCHANGEABLE ET PERSONNALISABLE

(30) Priority: 27.06.2019 IT 201900010206
(43) Date of publication of application: 23.02.2022
(73) Proprietor: Ferrari, Gianluca, 04015 Piverno (IT)
(72) Inventor: Ferrari, Gianluca, 04015 Piverno (IT)
(74) Representative: Jordan, Volker Otto Wilhelm
(86) International application number: PCT/IT2020/050149
(87) International publication number: WO 2020/261304

(56) References cited:
- US-A- 3 643 296
- US-A1- 2008 060 110
- US-A1- 2008 155 788

## Description

### TECNICHAL FIELD OF THE INVENTION

The object of the present invention is a multipurpose and customizable mechanical devise with technical function of tightening closure structured to create articles and fashion accessories and/or objects for domestic and industrial use.

The identified technical field of the invention is that of closing devise similar to buttons and diskettes of different shape, size and material, having two parts, one of which with a pin and another with an housing, which, once superimposed on each other, can be closed by means of pressure or once superimposed on each other they must rotate one over the other to allow interlocking closure like the classic bayonet closures.

Instead the present invention concerns a mechanical device of tightening closure consisting of two parts of which: one of the two is composed of a plate that contains a pin (1A), the other part (2) is necessarily structured of minimum three plates with housing (2A, 2B, 2C) superimposed on each other, as to form a single part of housing and suitable for incorporating the pin (1A); the central plate (2B) in structured with a lever (4), that allows the rotation of this plate up to the stop generating the locking mechanism of the two parts, also possibly with the help of a spring (4), simply by superimposing the same and without rotating each other.

With this invention, a tightening closure can be guaranteed without one of the two parts and/or diskettes must rotate one with respect to the other, guaranteeing a new technical function of tightening closure between two completely safe parts.

### BACKGROUND ART

Several buttons or diskettes, of shape, size and different materials, having types of locking and/or pressure closure applied with decorative functionality on clothes and to wearable objects of daily use which have characteristics and functions completely different from those of the present invention.

Infect, the buttons or disks known to the background art meet both limits linked to the practicality of fixing the two parts of the device, not always easy, requiring the rotation of one part with respect to the other in order to allow the tightening of the parts themselves, and limits related to the practicality of the attachment, requiring a pressure fit, of the two parts which does not guarantee a proper secure seal and is not comfortable to operate.

In particular, with the buttons and/or disks of the prior art, the pressure closure does not guarantee a secure seal, and the interlocking one can be applied by turning the two parts of the button and/or the disk each with respect to the other, preventing the technical and decorative features of the new invention from the device.

Devices such as those listed in the research report (N. 3643296 A, registered in the United States by KAHN EDWARD JOEL, 22 February 1972; N. 2008/060110 A1, registered in the United States by SCHMEZEL RICHARD, 13 March 2008; N. 2008/155788 A1, registered by WILCOX ROBERT, 3 July 2008), are all completely different. They have a part having a pin and a part having a one-piece housing which, once joined, must rotate one relative to the other in order to allow the closure of the both parties.

Therefore, these known patents are presented as classic closures that work with snap or pressure interlocking (bayonet locks) and do not have the technical characteristics of the Applicant's invention, i.e. a housing part which incorporates at least three plates inside of which the central one has a lever connected to it which rotates independently of the parts of the device and generates the locking closure of the same.

In fact, the bayonet lock meets the limits of the rotation of the two parts of the object to be joined which, if done in the opposite direction, would release them.

Moreover the buttons or disks known to the state of the art in addition, not offer possibility to interchange a part of the device in an easy, practical, fast and safe way, therefore allowing a series use with multiple objects.

Finally, the patent known in the state of the art, for example bayonet closures, do not allow to be used to fix articles and/or objects of daily, domestic and industrial use, with multiple anchoring points, since the superimposing of one plate on the other one would force the object to necessarily rotate, with evident inconvenience in the practicality of the action.

A customizable and multi-purpose mechanical device according to the preamble part of claim 1 is known from US 3 643 296 A.

### DISCLOSURE OF INVENTION

The purpose of this invention, instead, is to realize a multipurpose and customizable mechanical device of tightening closure that have a double functionality, technique and aesthetics, that is functional for the production of articles for domestic and/or industrial use, solving the inconveniences of the devices known to the state of the art.

The purpose of the present invention is to create a mechanical device to facilitate a tightening closure of articles and fashion accessories or daily objects of both domestic and industrial use, making the closure practical, quick and easy by simply overlapping the parts and without these rotating one with respect to the other, rotating only the central plate structured in the housing part of the device

The purpose of this invention is to create a mechanical device capable of ensuring robust sealing thanks to clamping, easily and without requiring a particular pressure to trigger the closure itself, making the device practical and useful even when applied in electrical, mechanical and/or hydraulic fields as junction shall be used.

Another purpose of this invention is to make a mechanical device of tightening closure, that in its decorative structure of articles and fashion accessories, or daily objects for domestic and industrial use, that can also have a thickness of a few millimeters, being much reduced compared to the devices known in the state of the art.

Another purpose of this invention is to realize a device that, is composed to a removable component that can be interchanged and customized, on a line of objects that present the same technical structure, in a practical and fast way. Another purpose of this invention is to offer n mechanical device, for any purpose used, that present a technical functionality and a high aesthetic value with a low cost of production.

Another purpose of the present invention is to realize a mechanical device that, depending on the utilization, can be realized in different shape, size and material.

These and other purposes are realized by the invention and result from the following description that illustrates some preferred forms of realization, to be understood as an example and not a limitation, in the figures below.

### BRIEF DESCRIPTION OF DRAWINGS

The figures below show examples of some forms and fields of application of the present invention, which may usefully fulfil the function of tightening closure in different fields of the state of the art (e.g. in the fashion field, as a locking device or decorative component applied to clothing and accessories; in the domestic field; in the hydraulic, mechanical and electrical field as a junction device).

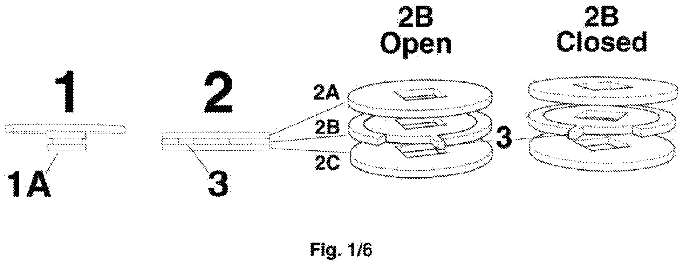

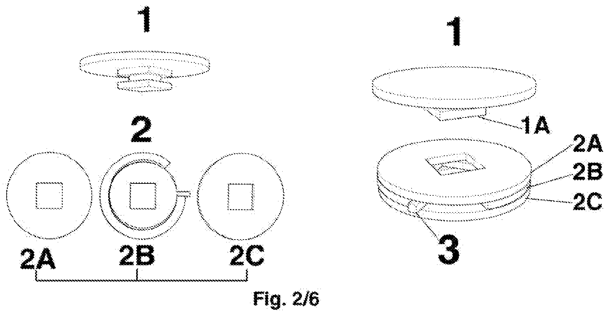

Figures 1 and 2 - illustrate a first form of realization of this invention as multipurpose mechanical devise with technical function of tightening closure composed of two parts: one of the two is composed of a plate interchangeable and customizable that contains a pin (1A); the other part of housing (2) which is composed of minimum three plates with housing (2A-2B-2C), each containing the same housing area, joined together to create a single part (2) with a single housing area (2a) suitable to cover the pin (1A); the central plate (2B) of the housing part (2) is structured to contain a lever (3) which rotates up to stop, also with a spring (4), inside of the two plates 2A and 2C; the pin (1A) included in the other part of the device (1), inserted within the housing area (2a) of the housing part (2), is locked by the rotation of the lever (4), incorporated in the central plate 2B, up to stop, so ensuring the tightening closure of the two parts of the device (as shown in Figure 2).

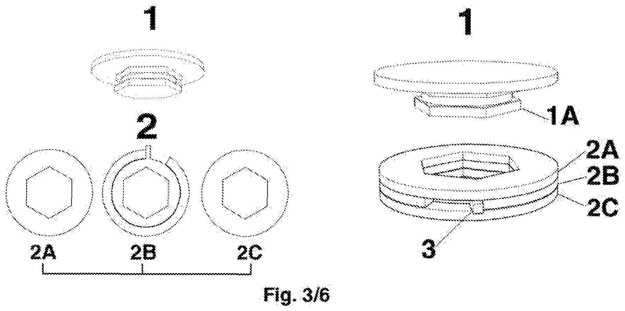

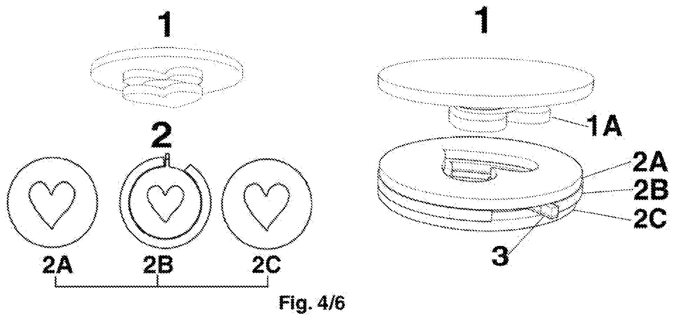

Figures 3 and 4- illustrate, as an example, different forms of implementation of the present mechanical device/ which is composed of the same characteristics and operation of the device illustrated in Figures 1 and 2, presenting it with a pin and housing areas of different shape and, specifically:
   - in Figure 3 pin and housing areas have an hexagonal shape;
   - in Figure 4 pin and housing areas have a form of an heart;

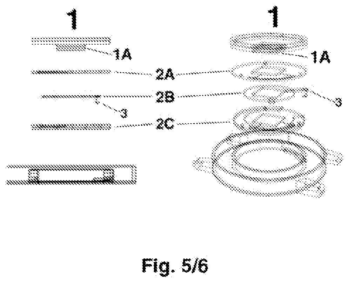

Fig. 5 shows the Applicant's device used for the creation of a wristwatch to allow the application of new technologies.

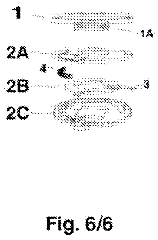

Fig. 6 shows the Applicant's device used for the creation of a bracelet to allow the application of new technologies.

The variants of realization, as described above, shall be understood as for example only, being the Applicant's device functional to be adapted for further realizations, shape, applications and uses in each mechanical field in order to obtain a tightening closure between two part, overcoming the limits of the patents known today.

## Claims

1. A customizable and multi-purpose mechanical device with technical functionality of tightening closure, as well as decorative function, structured to realize articles and fashion accessories and/or every objects for domestic and industrial use, composed of two parts of which one part (1) contains a plate with a pin (1A);
**characterized in that** the other part (2) contains three plates of housing (2A, 2B and 2C), joined together, to incorporate the pin (1A) that is tightened from the central housing plate (2B), which is structured to rotate by means of a lever (3) connected to it thus allowing the tightening closure of the two parts of the device when the same are simply superimposed on each other and without any rotation of one part with respect to the other part.

2. A multipurpose device according to the claim 1 where the pin (1A), inserted inside the housing area (2a) of the housing part (2) composed of three plates (2A, 2B and 2C), is tightened due to the rotation of the central plate (2B), also with the help of a spring (4), allowing the tightening closure of the two parts of the devise without rotate one with respect to the other.

3. A multi-purpose device according to claims 1 and 2 in which the three housing plates (2A, 2B and 2C) have the same shape of the pin (1A) incorporated in the part (1) and can be made in any size and material, depending on the technical field of use and the function to which the device must perform.

4. A multipurpose device according to the previous claims where the pin can be inserted in the housing plates which can also be more than three and of which only one plate is structured with a lever to rotate and, both the pin and the two housing parts may have different geometric and/or irregular shape with the exception of a circle and/or have the form of symbols, logos, letters, numbers, signs.

## Patentansprüche

1. Anpassbare mechanische Mehrzweckvorrichtung mit einer technischen Funktionalität eines Befestigungsverschlusses sowie einer dekorativen Funktion, welche strukturiert ist, um Artikel und Mode-Accessoires und/oder beliebige Objekte zur häuslichen und industriellen Verwendung zu realisieren, und welche aus zwei Teilen, zusammengesetzt ist, von welchen ein Teil (1) eine Platte mit einem Stift (1A) enthält;
**dadurch gekennzeichnet, dass** der andere Teil (2) drei Gehäuseplatten (2A, 2B und 2C) enthält, welche miteinander verbunden sind, um den Stift (1A) aufzunehmen, welcher von der zentralen Gehäuseplatte (2B) befestigt ist, welche strukturiert ist, um mittels eines Hebels (3) zu rotieren, welcher damit verbunden ist, wodurch der Befestigungsverschluss der beiden Teile der Vorrichtung erlaubt ist, wenn dieselben lediglich einander überlagert sind und ohne jegliche Rotation eines Teils in Bezug auf den anderen Teil.

2. Mehrzweckvorrichtung nach Anspruch 1, wobei der Stift (1A), welcher innerhalb des Gehäusebereichs (2a) des Gehäuseteils (2) eingesetzt ist, welches aus drei Platten (2A, 2B und 2C) zusammengesetzt ist, aufgrund der Rotation der zentralen Platte (2B) befestigt wird, ebenfalls mit der Hilfe einer Feder (4), wodurch der Befestigungsverschluss der beiden Teile der Vorrichtung erlaubt ist, ohne einen in Bezug auf den anderen zu rotieren.

3. Mehrzweckvorrichtung nach den Ansprüchen 1 und 2, wobei die drei Gehäuseplatten (2A, 2B und 2C) die gleiche Form des Stiftes (1A) aufweisen, welcher in dem Teil (1) aufgenommen ist, und, in Abhängigkeit des technischen Gebiets einer Verwendung und der Funktion, welche die Vorrichtung durchführen muss, in jeglicher Größe und in jeglichem Material hergestellt sein können.

4. Mehrzweckvorrichtung nach einem der vorhergehenden Ansprüche, wobei der Stift in die Gehäuseplatten eingesetzt sein kann, welche ebenfalls mehr als drei sein können und von welchen nur eine Platte mit einem Hebel zum Rotieren strukturiert ist, und wobei sowohl der Stift als auch die beiden Gehäuseteile eine verschiedene geometrische und/oder unregelmäßige Form mit der Ausnahme eines Kreises aufweisen können und/oder die Form von Symbolen, Logos, Buchstaben, Zahlen, Zeichen aufweisen können.

## Revendications

1. Dispositif mécanique personnalisable et à usages multiples, doté d'une fonction technique de fermeture par serrage ainsi que d'une fonction décorative, structuré pour réaliser des articles et des accessoires de mode et/ou des objets à usage domestique et industriel, composé de deux parties dont l'une (1) contient une plaque avec une goupille (1A) ;
**caractérisé en ce que** l'autre partie (2) contient trois plaques de logement (2A, 2B et 2C), unies entre elles, pour incorporer la goupille (1A) qui est serrée à partir de la plaque centrale de logement (2B), laquelle est structurée pour tourner au moyen d'un levier (3) qui lui est relié, permettant ainsi la fermeture par serrage des deux parties du dispositif lorsque celles-ci sont simplement superposées et sans aucune rotation d'une partie par rapport à l'autre partie.

2. Dispositif à usages multiples selon la revendication 1, dans lequel la goupille (1A), insérée à l'intérieur de la zone de logement (2a) de la partie de logement (2) composée de trois plaques (2A, 2B et 2C), est serrée par la rotation de la plaque centrale (2B), également à l'aide d'un ressort (4), permettant la fermeture par serrage des deux parties du dispositif sans rotation de l'une par rapport à l'autre.

3. Dispositif à usages multiples selon les revendications 1 et 2, dans lequel les trois plaques de logement (2A, 2B et 2C) ont la même forme que la goupille (1A) incorporée dans la pièce (1) et peuvent être fabriquées dans n'importe quelle taille et n'importe quel matériau, en fonction du domaine technique d'utilisation et de la fonction que le dispositif doit remplir.

4. Dispositif à usages multiples selon les revendications précédentes, dans lequel la goupille peut être insérée dans les plaques de logement qui peuvent également être plus de trois et dont une seule plaque est structurée avec un levier pour tourner et, tant la goupille que les deux parties delogement peuvent avoir différentes formes géométriques et/ou irrégulières à l'exception d'un cercle et/ou avoir la forme de symboles, de logos, de lettres, de chiffres, de signes.
